# EUROPÄISCHE PATENTSCHRIFT

(11) **EP 4 226 800 B1**
(45) Veröffentlichungstag und Bekanntmachung des Hinweises auf die Patenterteilung: **07.05.2025**
(21) Anmeldenummer: 23151924.0
(22) Anmeldetag: 17.01.2023
(51) Int. Cl.: A41D 19/015, A41D 31/08, A62B 17/00, G06F 3/039

(54) **HANDSCHUHE**
GLOVES
GANTS

(30) Priorität: 14.02.2022 DE 102022103356
(43) Veröffentlichungstag der Anmeldung: 16.08.2023
(73) Patentinhaber: Friedrich Seiz GmbH, 72555 Metzingen (DE)
(72) Erfinder: Seiz, Rainer, 72555 Metzingen (DE)
(74) Vertreter: Ruckh, Rainer Gerhard

(56) Entgegenhaltungen:
- US-A1- 2005 231 471
- US-A1- 2020 404 993

## Beschreibung

Die Erfindung betrifft einen Einsatzhandschuh.

Einsatzhandschuhe, auf welche sich die vorliegende Erfindung bezieht, werden im gewerblichen Bereich eingesetzt und dort als Bestandteil von Sicherheits- oder Schutzbekleidung für Personen eingesetzt, die sich in gefahrbringenden Umgebungen bewegen. Derartige Einsatzhandschuhe können dabei als Handschuhe, die von Mitgliedern eines Rettungsteams getragen werden, ausgebildet sein. Insbesondere handelt es sich bei den Handschuhen um Feuerwehr-Handschuhe. Derartige Handschuhe bestehen beispielweise aus hitzebeständigen, feuerfesten Materialien, um so einen Brandschutz für die den Handschuh tragende Person zu gewährleisten.

Bei Einsätzen ist es oftmals erforderlich, dass eine den Einsatzhandschuh tragende Person über ein mobiles Endgerät, wie einem Smartphone, mit anderen Personen kommuniziert. In gefahrbringenden Umgebungen, wie z.B. bei Bränden, ist es nicht möglich, dass die Person den Einsatzhandschuh abnimmt, um dann den Touchscreen des mobilen Endgerätes zu bestimmen. Weiterhin ist es oft auch aus Zeitgründen nicht möglich, dass die Person erst den Einsatzhandschuh abnimmt und dann mit dem Finger das mobile Endgerät bedient.

Daher besteht eine wesentliche Anforderung an derartige Einsatzhandschuhe, dass diese touchscreenfähig sind, d.h. die jeweilige Person muss mit dem Einsatzhandschuh einen Touchscreen eines mobilen Endgeräts bedienen können.

Um diese Touchsceenfähigkeit zu erreichen, ist es bekannt, auf die Fingerkuppe eines Handschuhfingers eines Handschuhs eine leitfähige Materialschicht aufzunähen. Um die Bedienbarkeit eines Touchscreens zu gewährleisten, ist es erforderlich, dass das leitfähige Material in Kontakt mit der Haut der den Handschuh tragenden Person ist. Dies lässt sich nur bei Handschuhen realisieren, die aus entsprechend dünnen Materialien bestehen.

Einsatzhandschuhe weisen jedoch erheblich größere Materialstärken auf, um die erforderlichen Schutzwirkungen zu erreichen. Damit kann die vorgenannte Lösung zur Gewährleistung der Touchscreenfähigkeit bei Einsatzhandschuhen nicht eingesetzt werden.

Die US 2005/0231471 A1 (D1) betrifft einen Handschuh, in dem Bedienelemente integriert sind. Als Bedienelement ist insbesondere ein Zeigerelement bestehend aus elektrisch leitfähigem Material vorgesehen, das von der Spitze eines Handschuhfingers seitlich hervorsteht. Mit diesem Bedienelement können insbesondere Eingaben an Touchscreens elektronischer Geräte, insbesondere mobiler Endgeräte, getätigt werden.

Die US 2020/0404993 A1 (D2) betrifft einen Handschuh. Im Bereich der Fingerkuppe eines Handschuhfingers ist ein Selektorelement integriert, das zur Bedienung eines Touchscreens eines elektronischen Geräts ausgebildet ist. Das Selektorelement steht über die vordere Spitze des Handschuhfingers hervor. Das Selektorelement umfasst ein elektrisch leitfähiges Segment, das in einem kompressiblen Material eingebettet ist.

Der Erfindung liegt die Aufgabe zugrunde, einen touchscreenfähigen Einsatzhandschuh bereitzustellen.

Zur Lösung dieser Aufgabe sind die Merkmale des Anspruchs 1 vorgesehen. Vorteilhafte Ausführungsformen und zweckmäßige Weiterbildungen der Erfindung sind in den abhängigen Ansprüchen beschrieben.

Die Erfindung betrifft einen Einsatzhandschuh mit einem Bedienelement, das zur Bedienung eines Touchscreens ausgebildet ist. Das Bedienelement mündet seitlich an einem Handschuhfinger aus und steht über dessen Außenseite hervor. Das Bedienelement besteht aus einem elektrisch leitfähigen und flammbeständigen Werkstoff.

Der Grundgedanke der Erfindung besteht somit darin, ein elektrisch leitfähiges Bedienelement im Einsatzhandschuh vorzusehen, das über die Außenseite eines Einsatzhandschuhs nach außen geführt ist. Dieses Bedienelement bildet ein Element, mit dem ein Touchscreen eines mobilen Endgeräts bedient werden kann. Wesentlich hierbei ist, dass die elektrische Leitfähigkeit des Bedienelements so groß ist, dass dieses ein völlig autarkes Element zur Bedienung eines Touchscreens ist. Insbesondere ist beim Kontakt des Bedienelements zur Haut der den Einsatzhandschuh tragenden Person erforderlich, um die für die Bedienung eines Touchscreens erforderliche elektrische Leitfähigkeit bereitzustellen

Durch diese Eigenschaft ist das erfindungsgemäße Bedienelement auch bei Einsatzhandschuhen mit größeren Materialstärken einsetzbar. Das erfindungsgemäße Bedienelement stellt somit die Touchscreenfähigkeit von Einsatzhandschuhen unterschiedlicher Beschaffenheiten sicher.

Ein weiterer wesentlicher Aspekt der Erfindung besteht darin, dass das Bedienelement nicht oben auf der Kuppe des Handschuhfingers angeordnet ist, sondern seitlich an diesem ausmündet.

Bei Durchführen von Arbeiten sind die Oberseiten der Fingerkuppen stets hohen Belastungen ausgesetzt. Ein dort angebrachtes Bedienelement würde schnell abgenutzt und beschädigt werden. Zudem würde ein von der Fingerkuppe des Handschuhfingers nach vorne hervorstehende Bedienelement ggf. auch Arbeiten, die eine den Einsatzhandschuhe tragende Person durchführen muss, behindern.

Die erfindungsgemäße Anbringung des Bedienelements seitlich am Handschuhfinger, löst diese Problematik auf einfache Weise. Durch die seitliche Anbringung des Bedienelements am Handschuhfinger, ist das Bedienelement gegen Belastungen und damit auch gegen Verschleiß und Beschädigungen geschützt. Zudem behindert das seitlich am Handschuhfinger angebrachte Bedienelement Arbeiten, die von einer den Einsatzhandschuh tragenden Person durchzuführen sind, nicht. Schließlich kann die den Einsatzhandschuh tragende Person auch mit dem seitlich am Handschuhfinger angebrachten Bedienelement eines Touchscreens eines mobilen Endgeräts einfach bedienen.

Das erfindungsgemäße Bedienelement besteht aus einem Material, das nicht nur elektrisch leitfähig ist, sondern auch flammbeständig, d.h. es besteht aus einem nicht brennbaren, nicht schmelzenden Material.

Dementsprechend besteht auch der Einsatzhandschuh selbst aus hitzebeständigen Materialien.

Der erfindungsgemäße Einsatzhandschuh kann damit auch im Bereich von Brandherden eingesetzt werden.

Damit kann der Einsatzhandschuh auch ein Feuerwehrhandschuh sein.

Gemäß einer vorteilhaften Ausführungsform besteht das Bedienelement aus Kunststoff.

Damit kann das Bedienelement rationell und kostengünstig als Kunststoff-Spritzgussteil hergestellt werden. Dabei wird ein Kunststoff gewählt, der neben einer hohen Flammbeständigkeit eine hohe elektrische Leitfähigkeit aufweist.

Die elektrische Leitfähigkeit kann generell dadurch erhöht werden, dass der Kunststoff metallische Partikel enthält.

Gemäß einer konstruktiv vorteilhaften Ausgestaltung besteht das Bedienelement aus einem Bediensegment und einem Grundkörper. Das Bediensegment steht über die Außenseite des Handschuhfingers hervor. Der Grundkörper ist innenliegend im Material des Handschuhfingers angeordnet.

Vorteilhaft sind das Bediensegment und der Grundkörper einstückig ausgebildet.

Das Bedienelement kann damit rationell hergestellt werden, insbesondere in Form eines einzigen Kunststoff-Spritzgussteils.

Das über die Außenseite des Handschuhfingers hervorstehende Bediensegment, wird zur Bedienung eines mobilen Endgeräts gegen dessen Touchscreen geführt. Der Grundkörper ist im Inneren des Handschuhmaterials insbesondere zwischen einem Außenmaterial und einem Innenmaterial integriert und sorgt für die lagestabile Lagerung des Bedienelements im Handschuhfinger. Da kein Kontakt des Bedienelements zur Haut der den Einsatzhandschuh tragenden Person erforderlich ist, ist der Grundkörper vollständig im Inneren des Handschuhmaterials gelagert. Das starre Bedienelement kommt somit nicht in Kontakt mit der Haut der den Einsatzhandschuh tragenden Person, wodurch ein erhöhter Tragekomfort erzielt wird.

Die Geometrie des Bediensegments des Bedienelements ist so ausgebildet, dass mit diesem Bediensegment Eingabefelder des Touchscreens, wie z.B. Tastaturfelder, einfach und exakt angetippt werden können.

Besonders vorteilhaft ist das Bediensegment noppenförmig ausgebildet. Die Breite des Bediensegments verringert sich zu dessen Oberseite hin kontinuierlich, so dass der obere Scheitelpunkt der Noppe eine nahezu punktförmige Auflagefläche zur Auflage auf den Touchscreen ausbildet, wodurch auch kleine Bedienfelder am Touchscreen exakt angetippt werden können.

Der Grundkörper des Bedienelements ist vorteilhaft plattenförmig ausgebildet, wobei dessen Durchmesser signifikant größer ist als der Durchmesser des Bediensegments. Der plattenförmige Grundkörper des Bedienelements lässt sich einfach zwischen dem Innen- und Außenmaterial des Handschuhfingers integrieren, ohne dass dessen Materialstärke nennenswert erhöht wird.

Die größere Dimension des Grundkörpers sorgt für einen guten Halt des Bedienelements im Material des Einsatzhandschuhs.

Vorteilhaft ist das Bediensegment durch ein Stanzloch im Außenmaterial des Handschuhfingers geführt.

Der Durchmesser des Stanzlochs ist an den Durchmesser des Bediensegments angepasst, so dass bereits durch die spielarme Führung des Bediensegments im Stanzloch eine gewisse Lagefixierung des Bedienelements erfolgt.

Der Grundkörper, dessen Durchmesser größer ist als der Durchmesser des Bediensegments, liegt unter dem Außenmaterial und verbindet ein Herauslösen des Bedienelements aus dem Handschuhfinger.

Eine endgültige Fixierung des Bedienelements im Handschuhfinger erfolgt dadurch, dass das Bediensegment mit dem Außenmaterial durch eine Naht verbunden ist, d.h. das Bedienelement wird durch Vernähen fixiert.

Vorteilhaft ist das Bedienelement im vorderen Bereich des Handschuhfingers angeordnet.

Durch diese ergonomisch günstige Anordnung des Bedienelements kann die den Einsatzhandschuh tragende Person einen Touchscreen eines mobilen Endgeräts bequem und komfortabel bedienen.

Der erfindungsgemäße Einsatzhandschuh kann als Fingerhandschuh ausgebildet sein. Dann kann prinzipiell das Bedienelement an jedem Handschuhfinger des Einsatzhandschuhs angeordnet sein. Besonders vorteilhaft befindet sich das Bedienelement im Bereich des Zeigefingers.

Generell sind mehrere Varianten von Fingerhandschuhen möglich. Der Einsatzhandschuh kann konventionell fünf Handschuhfinger aufweisen. Ebenso kann der Einsatzhandschuh auch nur drei Handschuhfinger aufweisen, wobei ein Handschuhfinger zur Aufnahme des Daumens, ein Handschuhfinger zur Aufnahme des Zeigefingers und ein weiterer Handschuhfinger zur Aufnahme der restlichen Finger dient.

Generell kann der Einsatzhandschuh auch als Fausthandschuh ausgebildet sein. Dann ist das Bedienelement an dem der Daumen einer Person aufnehmenden Handschuhfingers vorgesehen.

Natürlich kann bei einem Handschuhpaar der rechte und/oder der linke Handschuh mit dem Bedienelement ausgestattet sein.

Die Erfindung wird im Folgenden anhand der Zeichnungen erläutert. Es zeigen:
- Figur 1:: Ausführungsbeispiel des erfindungsgemäßen Einsatzhandschuhs in einer Draufsicht auf dessen Innenseite.
- Figur 2:: Einsatzhandschuh gemäß Figur 1 in einer Draufsicht auf dessen Rückseite.
- Figur 3:: Perspektive Darstellung des Bedienelements für den Einsatzhandschuh der Figuren 1 und 2.
- Figur 4:: Schnittdarstellung des Bedienelements gemäß Figur 3.
- Figur 5:: Integration des Bedienelements der Figuren 3 und 4 in einen Handschuhfinger des Einsatzhandschuhs gemäß den Figuren 1 und 2.
- Figur 6:: Draufsicht auf die Anordnung gemäß Figur 5.

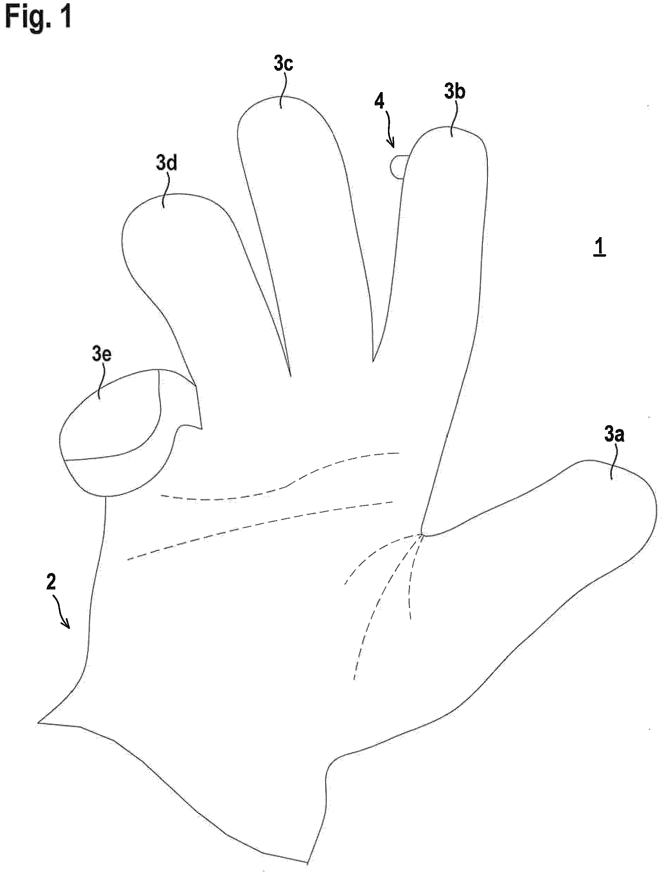

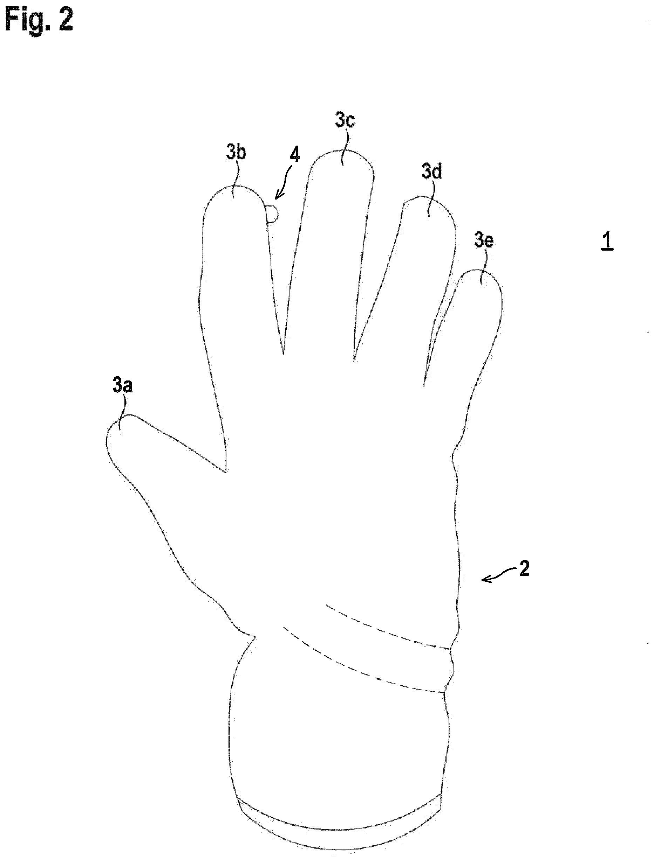

Die Figuren 1 und 2 zeigen ein Ausführungsbeispiel des erfindungsgemäßen Einsatzhandschuhs 1. Der Einsatzhandschuh 1 ist insbesondere ein Feuerwehrhandschuh. Entsprechend der Sicherheitsanforderungen für den Einsatz als Feuerwehrhandschuh besteht der Einsatzhandschuh 1 aus hitzebeständigen Materialien.

Der Einsatzhandschuh 1 ist im vorliegenden Fall als Fingerhandschuh ausgebildet und weist dementsprechend einen Handschuhkörper 2 mit fünf daran anschließenden Handschuhfingern 3a bis 3e auf. Eine den Einsatzhandschuh 1 tragende Person führt ihren Daumen in einen ersten Handschuhfinger 3a, die weiteren Finger in jeweils einen weiteren Handschuhfinger 3b bis 3e ein.

Erfindungsgemäß ist an einem Handschuhfinger 3b ein Bedienelement 4 vorgesehen, mit dem die den Einsatzhandschuh 1 tragende Person einen Touchscreen eines mobilen Endgeräts, insbesondere eines Smartphones, bedienen kann, ohne den Einsatzhandschuh 1 abnehmen zu müssen.

Das Bedienelement 4 kann an einem beliebigen Handschuhfinger 3a bis 3e angeordnet sein. Prinzipiell ist es sogar denkbar, an mehreren Handschuhfingern 3a bis 3e ein Bedienelement 4 vorzusehen.

Wie die Figuren 1 und 2 zeigen, befindet sich das Bedienelement 4 an dem Handschuhfinger 3b der für den Zeigefinger der Person vorgesehen ist.

Das Bedienelement 4 befindet sich im vorderen Teil des Handschuhfingers 3b. Wesentlich hierbei ist, dass das Bedienelement 4 seitlich am Handschuhfinger 3b angeordnet ist.

Die Finger 3 und 4 zeigen eine Einzeldarstellung des Bedienelements 4. Das Bedienelement 4 besteht generell aus einem flammbeständigen und elektrisch leitfähigen Material. Im vorliegenden Fall besteht das Bedienelement 4 aus Kunststoff. Das Bedienelement 4 kann demzufolge als Kunststoff-Spritzgussteil hergestellt werden.

Das Bedienelement 4 weist ein noppenförmiges Bediensegment 5 und einen einstückig mit dem Bediensegment 5 ausgebildeten Grundkörper 6 auf. Der Grundkörper 6 ist kreisscheibenförmig ausgebildet, d.h. er ist in Form eines flachen, dünnwandigen, plattenförmigen Körpers ausgebildet. Generell kann der Grundkörper 6 natürlich auch andere Geometrien aufweisen. Beispielsweise kann der Grundkörper 6 oval oder polygonal ausgebildet sein. Das Bediensegment 5 befindet sich im Zentrum des Grundkörpers 6 und steht von dessen Oberseite hervor. Die Geometrie des noppenförmigen Bediensegments 5 ist kuppelförmig, wobei der obere, dem Grundkörper gegenüberliegende Endbereich in Form eines Kugelabschnitts aufweist.

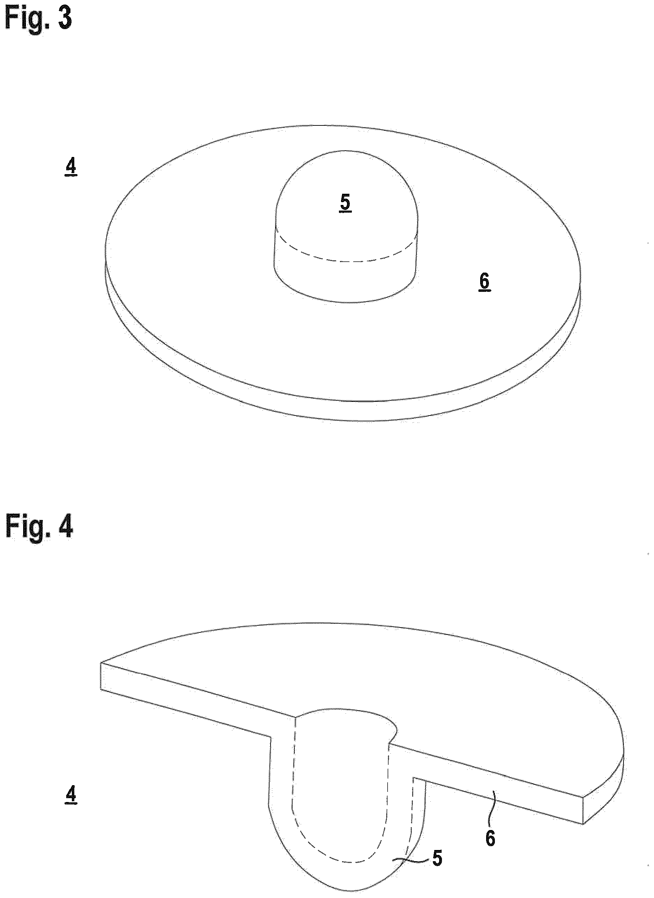

Wie Figur 4 zeigt, ist das Bediensegment 5 im vorliegenden Fall als Hohlkörper ausgebildet, der am unteren Ende im Bereich des Grundkörpers 6 offen ist. Prinzipiell kann das Bediensegment 5 auch ein Massivkörper sein.

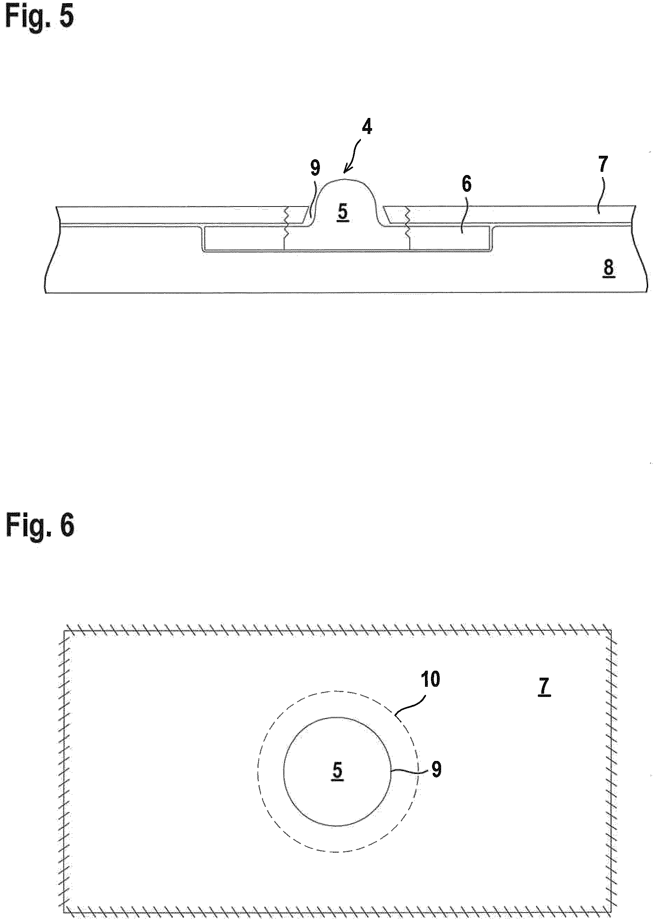

Die Figuren 5 und 6 zeigen die Integration des Bedienelements 4 im Handschuhmaterial des Einsatzhandschuhs 1. Dieses Handschuhmaterial ist in Figur 5 sehr stark vereinfacht derart dargestellt, dass das Handschuhmaterial ein Außenmaterial 7 und ein Innenmaterial 8 aufweist. Das Außenmaterial 7 und das Innenmaterial 8 können generell komplexere Strukturen aufweisen. Insbesondere kann das Innenmaterial 8 ein Innenfutter aufweisen. Auch kann zwischen Außenmaterial 7 und Innenmaterial 8 eine isolierende Schicht, insbesondere eine isolierende Membran vorgesehen sein.

Wie Figur 5 zeigt, liegt der Grundkörper des Bedienelements 4 zwischen dem Außenmaterial 7 und dem Innenmaterial 8, so dass der Grundkörper innenliegend im Handschuhmaterial angeordnet und nicht in Kontakt mit der Haut der den Einsatzhandschuh 1 tragenden Person kommt.

Wie die Figuren 5 und 6 zeigen, ist in das Außenmaterial 7 ein Stanzloch 9 eingearbeitet. Der Durchmesser des Stanzlochs 9 ist an den Durchmesser des Bediensegments 5 des Bedienelements 4 angepasst. Das Bedienelement 4 ist so im Handschuhmaterial gelagert, dass das Bediensegment 5 durch das Stanzloch 9 ragt und so nach außen über dem Handschuhfinger 3b hervorsteht. Das Bediensegment 5 ist spielarm im Stanzloch 9 geführt.

Die Fixierung des Bedienelements 4 erfolgt durch Vernähen. Wie Figur 6 zeigt, ist hierzu eine Naht 10 in dem das Stanzloch 9 begrenzenden Randbereich des Außenmaterials 7 vorgesehen, wobei die Naht 10 in Umfangsrichtung des Stanzlochs 9 umläuft. Mit dieser Naht 10 ist das Bedienelement 4 mit dem Außenmaterial 7 vernäht.

Das so im Handschuhfinger 3b integrierte Bedienelement 4 zeigen die Figuren 1 und 2 mit dem seitlich am Handschuhfinger 3b hervorstehenden Bediensegment 5.

Eine den Einsatzhandschuh 1 tragende Person kann zur Bedienung den Touchscreen eines mobilen Endgerätes, wie einem Smartphone, das Bediensegment 5 gegen den Touchscreen führen. Das Bedienelement 4 weist eine so hohe elektrische Leitfähigkeit auf, dass ohne Hautkontakt des Bedienelements 4 mit dem Finger der jeweiligen Person, Eingaben am Touchscreen mittels des Bedienelements 4 möglich sind.

### Bezugszeichenliste

- (1): Einsatzhandschuh
- (2): Handschuhkörper
- (3a-e): Handschuhfinger
- (4): Bedienelement
- (5): Bediensegment
- (6): Grundkörper
- (7): Außenmaterial
- (8): Innenmaterial
- (9): Stanzloch
- (10): Naht

## Patentansprüche

1. Einsatzhandschuh (1) mit einem Bedienelement (4), das zur Bedienung eines Touchscreens ausgebildet ist, **dadurch gekennzeichnet, dass** das Bedienelement (4) seitlich an einem Handschuhfinger (3b) ausmündet und über dessen Außenseite hervorsteht, und dass das Bedienelement (4) aus einem elektrisch leitfähigen und flammbeständigen Werkstoff besteht.

2. Einsatzhandschuh (1) nach Anspruch 1, **dadurch gekennzeichnet, dass** das Bedienelement (4) aus Kunststoff besteht.

3. Einsatzhandschuh (1) nach einem der Ansprüche 1 oder 2, **dadurch gekennzeichnet, dass** das Bedienelement (4) aus einem Bediensegment (5) und einem Grundkörper (6) besteht, wobei das Bediensegment (5) über die Außenseite des Handschuhfingers (3b) hervorsteht und der Grundkörper 6 innenliegend im Material des Handschuhfingers (3b) angeordnet ist.

4. Einsatzhandschuh (1) nach Anspruch 3, **dadurch gekennzeichnet, dass** das Bediensegment (5) noppenförmig und der Grundkörper (6) plattenförmig ausgebildet sind.

5. Einsatzhandschuh (1) nach einem der Ansprüche 3 oder 4, **dadurch gekennzeichnet, dass** das Bediensegment (5) und der Grundkörper (6) einstückig ausgebildet sind.

6. Einsatzhandschuh (1) nach einem der Ansprüche 3 bis 5, **dadurch gekennzeichnet, dass** der Grundkörper (6) des Bedienelements (4) zwischen einem Außenmaterial (7) und einem Innenmaterial (8) des Handschuhfingers (3b) angeordnet ist.

7. Einsatzhandschuh (1) nach Anspruch 6, **dadurch gekennzeichnet, dass** das Bediensegment (5) durch ein Stanzloch (9) im Außenmaterial (7) des Handschuhfingers (3b) geführt ist.

8. Einsatzhandschuh (1) nach Anspruch 7, **dadurch gekennzeichnet, dass** das Bediensegment (5) mit dem Außenmaterial (7) durch eine Naht (10) verbunden ist.

9. Einsatzhandschuh (1) nach einem der Ansprüche 1 bis 8, **dadurch gekennzeichnet, dass** das Bedienelement (4) im vorderen Bereich des Handschuhfingers (3b) angeordnet ist.

10. Einsatzhandschuh (1) nach einem der Ansprüche 1 bis 9, **dadurch gekennzeichnet, dass** dieser aus hitzebeständigen Materialien besteht.

11. Einsatzhandschuh (1) nach einem der Ansprüche 1 bis 10, **dadurch gekennzeichnet, dass** dieser ein Fausthandschuh oder ein Fingerhandschuh ist.

12. Einsatzhandschuh (1) nach einem der Ansprüche 1 bis 11, **dadurch gekennzeichnet, dass** dieser ein Feuerwehrhandschuh ist.

## Claims

1. A protection glove (1) with an operating element (4) which is designed to operate a touchscreen, **characterised in that** the operating element (4) opens out laterally on a glove finger (3b) and projects beyond the outside of the latter, and **in that** the operating element (4) consists of an electrically conductive and flame-resistant material.

2. A protection glove (1) according to claim 1, **characterised in that** the operating element (4) is made of plastic.

3. A protection glove (1) according to one of claims 1 or 2, **characterised in that** the operating element (4) consists of an operating segment (5) and a base body (6), the operating segment (5) projecting beyond the outside of the glove finger (3b) and the base body (6) being arranged on the inside in the material of the glove finger (3b).

4. A protection glove (1) according to claim 3, **characterised in that** the operating segment (5) is nub-shaped and the base body (6) is plate-shaped.

5. A protection glove (1) according to one of claims 3 or 4, **characterised in that** the operating segment (5) and the base body (6) are formed in one piece.

6. A protection glove (1) according to one of claims 3 to 5, **characterised in that** the base body (6) of the operating element (4) is arranged between an outer material (7) and an inner material (8) of the glove finger (3b).

7. A protection glove (1) according to claim 6, **characterised in that** the operating segment (5) is guided through a punched hole (9) in the outer material (7) of the glove finger (3b).

8. A protection glove (1) according to claim 7, **characterised in that** the operating segment (5) is connected to the outer material (7) by a seam (10).

9. A protection glove (1) according to one of claims 1 to 8, **characterised in that** the operating element (4) is arranged in the front region of the glove finger (3b).

10. A protection glove (1) according to one of claims 1 to 9, **characterised in that** this consists of heat-resistant materials.

11. A protection glove (1) according to one of claims 1 to 10, **characterised in that** it is a mitten or a finger glove.

12. A protection glove (1) according to one of claims 1 to 11, **characterised in that** it is a firefighting glove.

## Revendications

1. Gant de protection (1) avec un élément de commande (4) conçu pour utiliser un écran tactile, **caractérisé par le fait que** l'élément de commande (4) s'ouvre latéralement sur un doigt de gant (3b) et dépasse l'extérieur de ce dernier, et **par le fait que** l'élément de commande (4) est constitué d'un matériau conducteur d'électricité et résistant à la flamme.

2. Gant de protection (1) selon la revendication 1, **caractérisé en ce que** l'élément de commande (4) est en plastique.

3. Gant de protection (1) selon l'une des revendications 1 ou 2, **caractérisé en ce que** l'élément de commande (4) est constitué d'un segment de commande (5) et d'un corps de base (6), le segment de commande (5) dépassant l'extérieur du doigt de gant (3b) et le corps de base (6) étant disposé à l'intérieur dans la matière du doigt de gant (3b).

4. Gant de protection (1) selon la revendication 3, **caractérisé en ce que** le segment d'actionnement (5) a la forme d'un talon et que le corps de base (6) est en forme d'une plaque.

5. Gant de protection (1) selon l'une des revendications 3 ou 4, **caractérisé en ce que** le segment de fonctionnement (5) et le corps de base (6) sont formés d'une seule pièce.

6. Gant de protection (1) selon l'une des revendications 3 à 5, **caractérisé en ce que** le corps de base (6) de l'élément de commande (4) est disposé entre un matériau extérieur (7) et un matériau intérieur (8) du doigt de gant (3b).

7. Gant de protection (1) selon la revendication 6, **caractérisé en ce que** le segment de commande (5) est guidé à travers un trou perforé (9) dans le matériau extérieur (7) du doigt de gant (3b).

8. Gant de protection (1) selon la revendication 7, **caractérisé en ce que** le segment opérationnel (5) est relié au matériau extérieur (7) par une couture (10).

9. Gant de protection (1) selon l'une des revendications 1 à 8, **caractérisé en ce que** l'élément de commande (4) est disposé dans la région avant du doigt de gant (3b).

10. Gant de protection (1) selon l'une des revendications 1 à 9, **caractérisé en ce qu'**il est constitué de matériaux résistant à la chaleur.

11. Gant de protection (1) selon l'une des revendications 1 à 10, **caractérisé en ce qu'**il s'agit d'une mitaine ou d'un gant à doigts.

12. Gant de protection (1) selon l'une des revendications 1 à 11, **caractérisé en ce qu'**il s'agit d'un gant de lutte contre l'incendie.
